# EUROPÄISCHE PATENTSCHRIFT

(11) **EP 1 611 730 B1**
(45) Veröffentlichungstag und Bekanntmachung des Hinweises auf die Patenterteilung: **02.05.2007**
(21) Anmeldenummer: 04718296.9
(22) Anmeldetag: 08.03.2004
(51) Int. Cl.: H04L 29/12

(54) **VERFAHREN UND ANORDNUNG ZUR KONFIGURATION EINER EINRICHTUNG IN EINEM DATENNETZ**
METHOD AND ARRANGEMENT FOR CONFIGURING A DEVICE IN A DATA NETWORK
PROCEDE ET ENSEMBLE POUR LA CONFIGURATION D'UN DISPOSITIF DANS UN RESEAU DE TRANSMISSION DE DONNEES

(30) Priorität: 09.04.2003 DE 10316236
(43) Veröffentlichungstag der Anmeldung: 04.01.2006
(73) Patentinhaber: SIEMENS AKTIENGESELLSCHAFT, 80333 München (DE)
(72) Erfinder: SCHEERING, Christian, 33689 Bielefeld (DE)
(86) Internationale Anmeldenummer: PCT/EP2004/002365
(87) Internationale Veröffentlichungsnummer: WO 2004/091173

(56) Entgegenhaltungen:
- JP-A- 2002 123 400
- US-A- 6 049 826
- US-A1- 2003 041 151
- US-B1- 6 286 038
- US-B1- 6 345 294

## Beschreibung

Die Erfindung betrifft ein Verfahren zur Konfiguration einer Einrichtung in einem Datennetz und eine Anordnung zur Konfiguration einer Einrichtung in einem Datennetz.

In Datennetzen sind Einrichtungen über Verbindungen miteinander verknüpft, um Daten miteinander auszutauschen. Bei den Einrichtungen wird zwischen zentralen Einrichtungen, beispielsweise Servern, und Endpunkten, beispielsweise PCs, unterschieden. Solche Endpunkte werden häufig auch als Clients bezeichnet. Allgemein kommunizieren die Einrichtungen in den Datennetzen anhand von zugeordneten Adressen miteinander. Wenn der Datenaustausch in einem Datennetz nach dem Internet-Protokoll vorgenommen wird, sind die verwendeten Adressen die sog. IP-Adressen (IP = Internet-Protokoll).

Viele Datennetze, insbesondere solche mit vielen Einrichtungen, weisen eine Strukturierung auf. Das ist beispielsweise notwendig, um in weitverzweigten Netzen die Netzlast zu verringern und um Datensicherheit zu gewährleisten. Zur Strukturierung sind die Datennetze in logische Teilbereiche untergliedert, die man auch Domänen nennt. Innerhalb einer Domäne kann beispielsweise eine Anzahl PCs einem bestimmten Server oder einer anderen zentralen Einrichtung zugeordnet sein.

Die in den Datennetzen verwendeten IP-Adressen bestehen aus einer Zahlenfolge, wobei jede Einrichtung in einer Domäne und somit auch ein Server, der selbst eine Domäne repräsentiert, durch eine eindeutige IP-Adresse adressiert wird. Solche aus Zahlenfolgen bestehende Adressen sind zwar von Datenverarbeitungsgeräten leicht handzuhaben, für den Benutzer einer solchen Einrichtung jedoch sehr abstrakt. Aus diesem Grund können Einrichtungen, insbesondere zentrale Einrichtungen (Server), die eine Domäne repräsentieren, mit einem leichtverständlichen alphanumerischen Domänen-Namen bezeichnet werden. Ein solcher Domänen-Name hat beispielsweise die Struktur HTTP://computer.domaene.land . In diesem Beispiel bezeichnet der Adressteil "Land" den Nationalstaat, in dem dieser Server registriert ist; man bezeichnet diesen Adressteil "Land" auch als "Top-Level-Domain", weil dies die gröbste Untergliederung im weltweiten Datennetz (Internet) darstellt. Der Adressteil "Server" bezeichnet die sog. "Sub-Domäne", also eine Gruppe von Einrichtungen, die einem bestimmten Server zugeordnet ist. Der Adressteil "Name" bezeichnet schließlich eine einzelne Einrichtung in der betreffenden Domäne, also beispielsweise einen PC.

Um die geläufigen Domänen-Namen, die beispielsweise von Benutzern an Einrichtungen (z.B. in der Adresszeile eines Web-Browsers) manuell eingegeben werden, in die von den Einrichtungen selbst verwendeten numerischen IP-Adressen umzusetzen, sind in Datennetzen Adressierungs-Server angeordnet, beispielsweise Domain-Name-System-Server (DNS-Server). Die Aufgabe der Adressierungsserver besteht im wesentlichen darin, die sog. "full qualified domain names" einer Einrichtung ("Host") mit seiner IP-Adresse zu verknüpfen und diese auf externe Anfrage hin zu liefern.

Eine verbreitete Ausführungsform der beschriebenen Datennetze sind die Sprachdatennetze, auch VoIP-Netze (VoIP = Voice over Internet Protocol) genannt. Auch in den Sprachdatennetzen sind zentrale Einrichtungen angeordnet, beispielsweise Gateways, Gatekeeper und DNS-Server, und auch Endpunkte ("Clients", "VoIP-Clients"), die in den Sprachdatennetzen beispielsweise als Telefon mit Datennetzanschluss ("IP-Phone"), als Multimedia-PC oder aber als PC mit einer Telefon-Emulation ("Soft Phone") ausgestaltet sein können. Diese Endpunkte oder "Clients" werden analog zu der leitungsvermittelnden Telephonie auch allgemein als Endgeräte bezeichnet.

Die Einrichtungen in Datennetzen müssen vor ihrer Verwendung konfiguriert werden, damit ein störungsfreier Betrieb gewährleistet ist. Bei den Clients in Sprachdatennetzen bedeutet dies beispielsweise, dass an diesen Einrichtungen eingestellt werden muss, welches Übertragungs- bzw. Komprimierungsprotokoll ("Codec") für die Sprachübertragung in dem Datennetz oder Teil-Datennetz verwendet werden kann, welche zentrale Einrichtung von dem jeweiligen Endgerät benutzt werden kann, also beispielsweise welches Gateway dem entsprechenden Gerät zugeordnet ist etc.. Dabei müssen in den entsprechenden Endgeräten auch die IP-Adressen der zu verwendenden zentralen Einrichtungen konfiguriert werden, damit die Endgeräte mit diesen kommunizieren können.

In den bekannten Datennetzen hat sich als nachteilig erwiesen, dass die Konfiguration von Einrichtungen regelmäßig manuell durchzuführen ist und dabei mit einem hohen personellen Aufwand verbunden ist. Das gilt insbesondere dann, wenn eine bestehende Konfiguration geändert werden muss, weil beispielsweise eine zentrale Einrichtung in dem entsprechenden Datennetz eine geänderte Netzwerkadresse hat, oder wenn zentrale Einrichtungen dem Datennetz zugefügt oder aus diesem entfernt werden. Immer dann, wenn die Zuordnung zwischen Endpunkten und zentralen Einrichtungen des Datennetzes geändert wird, ergibt sich dabei die Notwendigkeit, zeitnah die Konfiguration der Endpunkte zu ändern.

Aus der Druckschrift JP 2002 123400 A (IBM Corp.) 26. April 2002 ist ein Verfahren zur Konfiguration einer Einrichtung in einem Datennetzwerk bekannt. Zur Konfiguration sendet die Einrichtung eine Abfragenachricht zu einem Server ("Remote-Server"), wodurch dieser Server der Einrichtung Anweisungen für den Start dieser Einrichtung, eine sog. "Bootstrap"-Routine und/oder eine Konfigurationsdatei übermittelt. Anhand dieser Informationen baut die Einrichtung eine Verbindung zu einem weiteren Server ("Local Network Server") auf und lädt von diesem weiteren Server ein Betriebssystem. Für den Verbindungsaufbau zum ersten Server ("Remote-Server") ist in der Einrichtung eine Netzwerkadresse dieses Servers fest konfiguriert.

Auch die Druckschrift US 6 049 826 Beser "Method and System for Cable Modem Initialization Using Dynamic Servers" zeigt ein Verfahren und eine Anordnung zur Konfiguration eines Modems in einem Datennetz. Dabei wird das Modem zuerst durch einen DHCP-Server konfiguriert, wonach diese Konfiguration in einem weiteren Schritt durch eine weitere Konfiguration "überschrieben" wird, wobei für das Überschreiben durch einen zweiten Server eine neue Konfigurations-Datei erstellt wird. Diese Datei wird durch einen "Trivial File Transfer Protocol"-Server ("TFTP") anhand eines dem Modem durch das DHCP-Verfahren zugeordneten Namens erstellt und bereitgestellt.

Es ist bekannt, die Zuordnung von Endpunkten zu zentralen Einrichtungen (Servern) automatisiert zu aktualisieren, indem die Server in einem Datennetz in regelmäßigen Zeitabständen ein sog. "Scanning" durchführen. Ziel des "Scannings" ist es, dem Netzwerk zugefügte Endpunkte aufzufinden, und diesen Endpunkten alle notwendigen Informationen zuzusenden, um sie für den Betrieb in dem Datennetz zu konfigurieren. Dabei versendet jeder Server Testnachrichten an jede Adresse aus einem bestimmten Adressbereich ("Adressband") und überprüft damit, ob die entsprechenden Adressen jeweils Endpunkten zugeordnet sind. Die dabei aufgefundenen Endpunkte werden dann, sofern sie noch nicht oder noch nicht richtig konfiguriert sind, mit entsprechenden Informationen versorgt und somit für den Betrieb in dem entsprechenden Datennetz eingerichtet.

An dem "Scanning-Verfahren" hat sich als nachteilig erwiesen, dass durch das zyklische Versenden einer großen Menge von Testnachrichten eine hohe Netzlast entsteht, und zwar auch dann, wenn nur wenige oder gar kein Endpunkt dem Datennetz hinzugefügt wurde. Solche Endpunkte, die zwischen zwei "Scanning"-Vorgängen dem Datennetz neu hinzugefügt wurden, sind bis zum Abschluss des nächsten Durchlaufs nicht nutzbar. Ein weiterer Nachteil dieses Verfahrens ist, dass die Adressenstruktur in dem Datennetz so beschaffen sein muss, dass die Netzwerkadressen der hinzugefügten Endpunkte zu den von den entsprechenden Servern abgesuchten Adressbändern passen muss, bzw. umgekehrt die Adressbänder auf die im Datennetz verwendeten Adressen passen müssen.

Die der Erfindung zugrunde liegende Aufgabe ist somit, ein Verfahren und eine Anordnung anzugeben, bei denen die Konfiguration von Einrichtungen in Datennetzen vereinfacht ist.

Die Lösung dieser Aufgabe ist für das Verfahren durch die im Patentanspruch 1 angegebenen Merkmale und für die Anordnung durch die im Patentanspruch 9 angegebenen Merkmale gegeben.

Die Lösung sieht für das Verfahren vor, dass in die Einrichtung ein Domänen-Name eingespeichert wird, die Einrichtung eine Abfragenachricht, die den Domänen-Namen umfasst, zu einem Adressierungs-Server überträgt, der der Umsetzung zwischen Domänen-Namen und den diesen zugehörigen Internet-Adressen dient, der Adressierungs-Server an die Einrichtung als Antwort auf die Abfragenachricht eine Adressinformation eines dieser Einrichtung zugeordneten Parameter-Servers überträgt, die Einrichtung anhand der Adressinformation eine Verbindung zu dem Parameter-Server herstellt, und der Parameter-Server über diese Verbindung zu der Einrichtung Parameter überträgt, die der Konfiguration der Einrichtung dienen. Dadurch wird der manuelle Aufwand zur Konfiguration der Einrichtung minimiert. Außerdem wird eine Einrichtung unverzüglich nach ihrem ersten Einschalten im Datennetz konfiguriert.

Die Vorteile der Anordnung ergeben sich analog aus den Vorteilen des Verfahrens.

Durch die kennzeichnenden Merkmale der Unteransprüche 2 bis 8 ist das Verfahren in vorteilhafter Weise weiter ausgestaltet. Bevorzugte Ausführungsbeispiele der Anordnung sind in den Unteransprüchen 10 bis 14 niedergelegt, wobei deren Vorteile gleichlautend zu den Vorteilen der entsprechenden Ausgestaltungen des Verfahrens sind.

Das Verfahren wirkt besonders vorteilhaft in Sprachdatennetzen, in denen Sprachinformationen in Datenpaketen nach dem Internet-Protokoll übermittelt werden, weil in Sprachdatennetzen besonders häufig Einrichtungen konfiguriert werden müssen.

In Datennetzen mit mehreren Domänen mit jeweils zugeordneten Parameter-Servern kann einer Einrichtung die Adresse des Parameter-Servers, von dem die Einrichtung konfiguriert werden soll, übermittelt werden, wenn der Domänen-Name der Name derjenigen Domäne ist, der die Einrichtung (EG) zugeordnet ist.

Bestehende Adressierungs-Server können weiterverwendet werden, wenn in dem Adressierungs-Server in Datensätzen jeweils zu den Namen von Domänen die Internet-Protokoll-Adressen der zugehörigen Server gespeichert sind, wenn die Adressinformation des der Einrichtung zugeordneten Parameter-Servers in einem Textfeld gespeichert ist, welches zu dem Datensatz gehört, der zu dem dieser Einrichtung (EG) zugeordneten Domänen-Namen gehört, und wenn der Inhalt dieses Textfeldes der Einrichtung (EG) als die Antwort übermittelt wird.

Ein bewährter Adressierungs-Server wird verwendet, wenn als Adressierungs-Server ein Domain-Name-System-Server eingesetzt wird.

Eine manuelle Zuordnung der Einrichtung zu einem Parameter-Server kann erfolgen, indem durch die Eingabe eines Benutzers oder Administrators der Domänen-Name an der Einrichtung (EG) eingegeben und eingespeichert wird.

Wenn der Einrichtung (EG) nach deren Inbetriebnahme mittels des DHCP-Verfahrens (DHCP = Dynamic Host Configuration Protocol) der Domänen-Name zur Einspeicherung übermittelt und / oder der Einrichtung (EG) eine gültige Internet-Adresse zugewiesen wird, kann die Vorkonfigurierung des Domänen-Namens durch den Hersteller oder einen Administrator unterbleiben und die Einrichtung kann ohne weiteren manuellen Eingriff in Betrieb gesetzt werden.

Wenn ein fiktiver Domänen-Name, der zu keiner realen Domäne gehört, als der Domänen-Name in die Einrichtung eingespeichert wird, können auch Einrichtungen, die keiner realen Domäne zugeordnet sind, betrieben werden.

Wenn neben dem fiktiven Domänen-Namen auch ein realer Domänen-Name, der der Name der Domäne ist, dem die Einrichtung zugeordnet ist, als Domänen-Name in die Einrichtung eingespeichert wird, und in einem ersten Versuch die Abfragenachricht mit dem realen Domänen-Namen zu dem Adressierungs-Server übertragen wird, und in dem Fall, dass in dem Adressierungs-Server anhand des im ersten Versuch übertragenen Domänen-Namens keine Adressinformation ermittelt werden kann, von dem Adressierungs-Server als Adressinformation eine negative Quittierungsnachricht an die Einrichtung übermittelt wird, und das Endgerät nach dem Empfang der negativen Quittierungsnachricht in einem zweiten Versuch eine weitere Abfragenachricht mit dem fiktiven Domänen-Namen zu dem Adressierungs-Server versendet, erhöht sich die Wahrscheinlichkeit, dass der Einrichtung der Name eines Parameter-Servers übermittelt werden kann.

Ausführungsbeispiele des erfindungsgemäßen Verfahrens sind nachfolgend anhand der Zeichnungen erläutert und dienen gleichzeitig der Erläuterung eines Ausführungsbeispiels der erfindungsgemäßen Anordnung.

Dabei zeigt:
- Figur 1: in schematischer Darstellung ein Datennetz mit einer Einrichtung, einem Adressierungs-Server und mit einem Parameter-Server, und
- Figur 2: in chronologischer Reihenfolge die zwischen der Einrichtung, dem Adressierungs-Server und dem Parameter-Server ausgetauschten Meldungen.

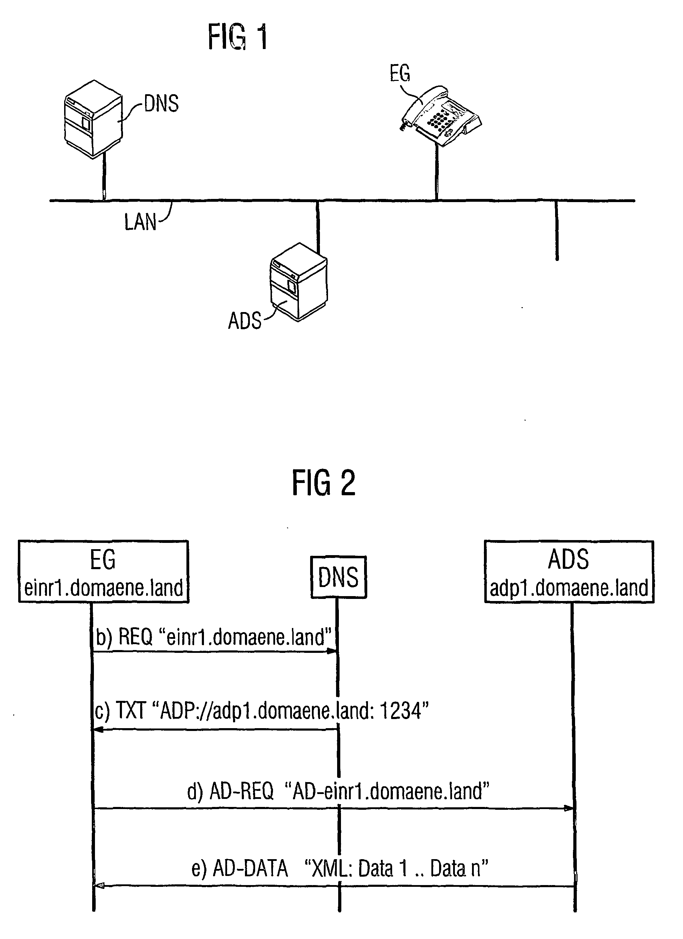

Die Figur 1 zeigt in schematischer Darstellung ein Datennetz (LAN), in dem als Komponenten eine Einrichtung (EG), ein Adressierungs-Server (DNS) und ein Parameter-Server (ADS) (ADS = Auto Discovery Server) angeordnet sind. Prinzipiell können von allen Komponenten, insbesondere von der Einrichtung (EG), gleichartige Komponenten mehrfach im Datennetz (LAN) vorhanden sein; aus Gründen der Übersichtlichkeit ist jedoch jede der Komponenten nur einfach dargestellt. Alle Komponenten des Datennetzes (LAN) können logische Verbindungen zu anderen Komponenten aufbauen und darüber Daten miteinander austauschen.

In diesem Beispiel ist das Datennetz (LAN) als Sprachdatennetz ("VoIP-Netz") ausgeführt, in welchem Sprachendgeräte ("IP-Phones") Sprachinformationen als Datenpakete gemäß des Internet-Protokolls übertragen. Als Einrichtung (EG) können dabei aber auch andere, hier nicht dargestellte Komponenten eingesetzt werden, beispielsweise Voice-Mail-Server oder PCs; letztgenannte werden bevorzugt mittels Hard- und Software als IP-Phone benutzt. Weiterhin sind in dem exemplarisch dargestellten Sprachdatennetz als zentrale Einrichtungen ein Gatekeeper und ein Gateway vorhanden, wobei auch diese zentralen Einrichtungen in der Figur 1 nicht dargestellt sind. Dabei dient ein Gatekeeper der Steuerung des Verbindungsaufbaus zwischen Endgeräten (EG), und das Gateway ist die Voraussetzung dafür, dass Verbindungen zu Teilnehmern aufgebaut werden können, die nicht in dem gleichen Datennetz (LAN) angeordnet sind.

Als Adressierungs-Server (DNS) wird hier ein Domain-Name-System-Server ("DNS-Server") eingesetzt. In dem Adressierungs-Server (DNS) sind Datensätze abgespeichert, in denen jeweils einem Domänen-Namen die Netzwerk-Adresse ("IP-Adresse") einer zugeordneten Netzwerkkomponente (Host) zugeordnet ist. Es wird unterschieden zwischen realen Domänen-Namen, die existierenden Domänen zugeordnet sind, und fiktiven Domänen-Namen, die in Ihrer Struktur wie reale Domänen-Namen aufgebaut sind, jedoch keinen Bezug zu einer realen Domäne haben. Bei Datensätzen, die fiktive Domänen-Namen betreffen, ist dabei die zugeordnete Netzwerk-Adresse natürlich irrelevant.

In einem Datensatz des Adressierungs-Servers (DNS) können in einem Textfeld (TXT-RR = Text-Resource-Record) auch Textinformationen gespeichert sein, beispielsweise um den Namen und die Rufnummer des Netzwerkadministrators zu speichern, der für die jeweilige Netzwerkkomponente verantwortlich ist. Prinzipiell können in einem solchen Textfeld aber beliebige Texte mit einer begrenzten Länge gespeichert sein. Der Inhalt eines solchen Textfeldes kann von der Einrichtung (EG) im Netzwerk durch eine Abfragenachricht unter Angabe des Domänen-Namens des jeweiligen Datensatzes abgerufen werden. Die Struktur solcher Textfelder ist für die Domain-Name-System-Server in einem RFC (RFC = Request for Comment) definiert (RFC1035 in HTTP://ftp.rfc-editor.org/in-notes/rfc1035.txt ).

In dem Adressierungs-Server (DNS) sind in den Textfeldern bestimmter Datensätze Adressinformationen, also die IP-Adresse und die IP-Portnummer, des Parameter-Servers (ADS) gespeichert, die zum Auffinden und zum Verbindungsaufbau zu dem Parameter-Server (ADS) von der Einrichtung (EG) verwendet werden können. Dabei ist es unerheblich, ob es sich bei den Domänen-Namen der Datensätze um reale oder um fiktive Domänen-Namen handelt; wichtig ist vielmehr, dass anhand des Domänen-Namens die Adressinformation des Parameter-Servers (ADS) aufgefunden wird. Falls in dem Datennetz (LAN) mehrere Einrichtungen und Parameter-Server angeordnet sind, kann durch das Einspeichern verschiedener Domänen-Namen in den unterschiedlichen Einrichtungen die Zuordnung eines der Parameter-Server zu der jeweiligen Einrichtung gesteuert werden.

Im Folgenden werden die wesentlichen Verfahrensschritte zur Konfiguration der Einrichtung (EG) erläutert, wobei die Figur 2 diejenigen Schritte zeigt, die den Informationsfluss zwischen den in Figur 1 gezeigten Komponenten Einrichtung (EG), Adressierungs-Server (DNS) und Parameter-Server (ADS) betreffen. Dabei sind neben den Pfeilen, die die Richtung des Informationsflusses bezeichnen, die Aufzählungszeichen b)..e) der Verfahrensschritte und symbolisierte Meldungen gezeigt.

In einem ersten Schritt wird in die Einrichtung (EG) ein Domänen-Name eingespeichert. Dazu gibt ein Administrator an der Einrichtung (EG) einen Domänen-Namen manuell ein. Es handelt sich dabei um den Namen derjenigen Domäne, der die Einrichtung (EG) zugeordnet ist; dieser lautet hier: einrl.domaene.land . Falls die Einrichtung (EG) keiner realen (existierenden) Domäne zugeordnet ist, kann an dieser Stelle auch ein fiktiver Domänen-Name eingegeben werden. In einer besonderen Ausführungsform können auch mehrere Domänen-Namen, also beispielsweise ein realer Domänen-Name und ein fiktiver Domänen-Name, in die Einrichtung (EG) eingespeichert werden.

Eine andere Art der Zuweisung als die hier beschriebene manuelle Methode wird an späterer Stelle erläutert.

Im nächsten Schritt (b) baut die Einrichtung (EG) eine Verbindung zu dem Adressierungs-Server (DNS) auf. Dazu muss in der Einrichtung (EG) eine Adressinformation (Netzwerkadresse, IP-Adresse) des Adressierungs-Servers (DNS) gespeichert sein. Das Einspeichern dieser Adressinformation kann entweder manuell oder automatisiert, beispielsweise durch Nutzung des DHCP-Verfahrens (DHCP = Dynamic Host Configuration Protocol), erfolgen; solche Verfahren sind allgemein bekannt und werden hier nicht weiter vertieft.

Die Einrichtung (EG) sendet im Schritt b) nun eine Abfragenachricht REQ "einrl.domaene.land" , die den eingespeicherten Domänen-Namen umfasst, zu dem Adressierungs-Server (DNS). Der Adressierungs-Server (DNS) ermittelt nun in seiner Datenbank den Datensatz, der dem übermittelten Domänen-Namen entspricht, und übersendet im nächsten Schritt (c) als Antwort die in dem Datensatz gespeicherten Informationen einschließlich der in dem Textfeld niedergelegten Textinformation zu der Einrichtung (EG). Die Textinformation lautet TXT "ADP://adp1.domaene.land:1234" und ist derart aufgebaut, dass anhand ihrer Struktur eindeutig ist, dass es sich dabei um die Adressinformation für den Parameter-Server (ADS) handelt. Im vorliegenden Beispiel ist diese Adressinformation entweder nach dem Muster ADP://123.45.67.89:1011 oder nach dem Muster ADP://host.domaene.land:portnummer aufgebaut, wobei das Kürzel ADP (Auto Discovery Protocol) den unter dieser Adresse erreichbaren Konfigurierungs-Dienst des Parameter-Servers (ADS) klassifiziert und der Rest der Adressinformation in numerischer (IP-Adresse) oder alphanumerischer (full qualified domain name) Form die Netzwerkadresse und die IP-Portnummer des Konfigurierungs-Dienstes angibt.

Im nächsten Schritt d) extrahiert die Einrichtung (EG) die Adressinformation aus der übertragenen Textinformation und speichert diese. Falls die Adressinformation in einer numerischen Form (IP-Adresse und IP-Portnummer) vorliegt, baut die Einrichtung (EG) in einem weiteren Schritt (d) anhand der Adressinformation eine Verbindung zu dem Parameter-Server (ADS) auf. Falls die Adressinformation jedoch in der geschilderten alphanumerischen Form (full qualified domain name und IP-Portnummer) vorliegt, kann es erforderlich sein, dass die Einrichtung (EG) in einem Zwischenschritt erneut eine Verbindung zu dem Adressierungs-Server (DNS) aufbaut, um die der übertragenen alphanumerischen Adressinformation in die zugeordnete numerische Netzwerkadresse aufzulösen.

Nach dem Verbindungsaufbau zu dem Parameter-Server (ADS) versendet die Einrichtung (EG) eine weitere Abfragenachricht AD-REQ "AD-einrl.domaene.land" zu dem Parameter-Server (ADS). Als Antwort auf diese weitere Abfragenachricht versendet in einem abschließenden Schritt (e) der Parameter-Server (ADS) zu der Einrichtung (EG) Informationen, die der Konfiguration der Einrichtung (EG) dienen. Die Übermittlung dieser Informationen findet hier im XML-Format (XML = Extensible Markup Language) statt, weil in den gebräuchlichen Datennetzen (LAN) die Netzwerkkomponenten bereits für den Transport solcher XML-Nachrichten ausgerüstet sind. Eine solche Nachricht ist hier nach dem Muster AD-DATA "XML:Data1 .. Data n" aufgebaut, wobei das einleitende Kürzel AD-DATA ein Kennzeichen für Konfigurierungs-Daten ist. Selbstverständlich können die gewünschten Informationen jedoch auch in anderer Form übermittelt werden.

Die empfangenen Informationen werden in der Einrichtung (EG) nun dazu verwendet, um die erforderliche Konfiguration vorzunehmen. Dies ist beispielsweise die Aktivierung der in dem jeweiligen Datennetz (LAN) verwendbaren Protokolle zur Sprachkomprimierung ("Sprach-Codecs") und andere Einstellungen.

In der Einrichtung (EG) können auch mehrere Domänen-Namen eingespeichert werden. So kann die Einrichtung (EG) bereits herstellerseitig mit einem fiktiven, jedoch allgemein bekannten Domänen-Namen versehen werden, so dass die Einrichtung (EG) nach der Inbetriebnahme ohne weitere Konfigurierung eines Domänen-Namens eine Verbindung zu dem Adressierungs-Server (DNS) aufbauen kann und auf diesem Wege die Adressinformation für den Verbindungsaufbau zum Parameter-Server (ADS) erhält. Voraussetzung dafür ist, dass der verwendete allgemein bekannte fiktive Domänen-Name in einem Datensatz des Adressierungs-Servers (DNS) gespeichert ist. Ein realer Domänen-Name kann der Einrichtung (EG) nach der Inbetriebnahme entweder anstelle des fiktiven Domänen-Namens oder zusätzlich zu diesem eingespeichert werden.

In letzterem Fall verwendet die Einrichtung (EG) zunächst den eingespeicherten realen Domänen-Namen, um von dem Adressierungs-Server (DNS) die Adressinformation über den Parameter-Server (ADS) zu erlangen. Falls in dem Adressierungs-Server (DNS) jedoch kein Datensatz mit diesem realen Domänen-Namen abgespeichert ist, antwortet dieser der Einrichtung (EG) mit einer entsprechenden Fehlermeldung. Die Einrichtung (EG) wiederholt nun die Abfragenachricht, jetzt jedoch mit dem eingespeicherten fiktiven Domänen-Namen. Durch dieses zweistufige Verfahren steigt die Wahrscheinlichkeit, dass die Einrichtung (EG) erfolgreich mit der Adressinformation über den Parameter-Server (ADS) versorgt wird.

## Patentansprüche

1. Verfahren zur Konfiguration einer Einrichtung (EG) in einem Datennetz (LAN),
wobei als das Datennetz (LAN) ein Sprachdatennetz verwendet wird, in dem Sprachinformationen in Datenpaketen nach dem Internet-Protokoll übermittelt werden,
wobei
in Schritt a) in die Einrichtung (EG) ein Domänen-Name eingespeichert wird,
in Schritt b) die Einrichtung (EG) eine Abfragenachricht, die den Domänen-Namen umfasst, zu einem Adressierungs-Server (DNS) überträgt, der der Umsetzung zwischen Domänen-Namen und den diesen zugehörigen Internet-Adressen dient,
in Schritt c) der Adressierungs-Server (DNS) an die Einrichtung (EG) als Antwort auf die Abfragenachricht eine Adressinformation eines dieser Einrichtung (EG) zugeordneten Parameter-Servers (ADS) überträgt,
in Schritt d) die Einrichtung (EG) anhand der Adressinformation eine Verbindung zu dem Parameter-Server (ADS) herstellt, und
in Schritt e) der Parameter-Server (ADS) über diese Verbindung zu der Einrichtung (EG) Parameter überträgt, die der Konfiguration der Einrichtung (EG) dienen.

2. Verfahren nach Patentanspruch 1,
**dadurch gekennzeichnet, dass**
der Domänen-Name der Name derjenigen Domäne ist, der die Einrichtung (EG) zugeordnet ist.

3. Verfahren nach einem der vorhergehenden Patentansprüche,
**dadurch gekennzeichnet, dass**
in dem Adressierungs-Server (DNS) in Datensätzen jeweils zu den Namen von Domänen die Internet-Protokoll-Adressen der zugehörigen Server gespeichert sind,
dass die Adressinformation des der Einrichtung (EG) zugeordneten Parameter-Servers (ADS) in einem Textfeld gespeichert ist, welches zu dem Datensatz gehört, der zu dem dieser Einrichtung (EG) zugeordneten Domänen-Namen gehört,
und dass der Inhalt dieses Textfeldes der Einrichtung (EG) als die Antwort übermittelt wird.

4. Verfahren nach einem der vorhergehenden Patentansprüche,
**dadurch gekennzeichnet, dass**
als Adressierungs-Server (DNS) ein Domain-Name-System-Server eingesetzt wird.

5. Verfahren nach einem der vorhergehenden Patentansprüche,
**dadurch gekennzeichnet, dass**
in Schritt a) durch eine Eingabe eines Benutzers oder Administrators der Domänen-Name an der Einrichtung (EG) eingegeben und eingespeichert wird.

6. Verfahren nach einem der Patentansprüche 1 bis 4,
**dadurch gekennzeichnet, dass**
in Schritt a) der Einrichtung (EG) nach deren Inbetriebnahme mittels eines Verfahrens gemäß dem Dynamic-Host-Configuration-Protocols der Domänen-Name zur Einspeicherung übermittelt und / oder der Einrichtung (EG) eine gültige Internet-Adresse zugewiesen wird.

7. Verfahren nach einem der Patentansprüche 1 bis 6,
**dadurch gekennzeichnet, dass**
in Schritt a) ein fiktiver Domänen-Name, der zu keiner realen Domäne gehört, als der Domänen-Name in die Einrichtung (EG) eingespeichert wird.

8. Verfahren nach Patentanspruch 7,
**dadurch gekennzeichnet, dass**
in Schritt a) neben dem fiktiven Domänen-Namen auch ein realer Domänen-Name, der der Name der Domäne ist, dem die Einrichtung (EG) zugeordnet ist, als Domänen-Name in die Einrichtung (EG) eingespeichert wird,
in Schritt b) in einem ersten Versuch die Abfragenachricht mit dem realen Domänen-Namen zu dem Adressierungs-Server (DNS) übertragen wird, und
in Schritt c) in dem Fall, dass in dem Adressierungs-Server (DNS) anhand des im ersten Versuch übertragenen Domänen-Namens keine Adressinformation ermittelt werden kann, von dem Adressierungs-Server (DNS) als Adressinformation eine negative Quittierungsnachricht an die Einrichtung (EG) übermittelt wird, wobei
das Endgerät nach dem Empfang der negativen Quittierungsnachricht in einem zweiten Versuch eine weitere Abfragenachricht mit dem fiktiven Domänen-Namen zu dem Adressierungs-Server (DNS) versendet.

9. Anordnung zur Konfiguration einer Einrichtung (EG) in einem Datennetz (LAN),
wobei das Datennetz (LAN) ein Sprachdatennetz ist, in dem Sprachinformationen in Datenpaketen nach dem Internet-Protokoll übermittelt werden,
wobei die Einrichtung (EG) mit einem Speicher zum Einspeichern eines Domänen-Namens versehen ist,
mit einem Adressierungsserver (DNS), der der Zuordnung von Domänen-Namen zu Internet-Adressen dient,
und mit einem Parameter-Server (ADS), in dem Parameter gespeichert sind, die zur Konfiguration der Einrichtung (EG) für deren Berieb in dem Datennetz (LAN) nutzbar sind,
wobei die Einrichtung (EG), der Adressierungsserver (DNS) und der Parameter-Server (ADS) über das Datennetz (LAN) verbunden sind,
wobei die Einrichtung (EG) zur Übertragung einer Abfragenachricht zu dem Adressierungs-Server (DNS) ausgebildet ist, die den in der Einrichtung (EG) eingespeicherten Domänen-Namen umfasst,
wobei der Adressierungs-Server (DNS) Mittel umfasst, um an die Einrichtung (EG) als Antwort auf die Abfragenachricht anhand des von der Einrichtung (EG) übertragenen Domänen-Namens die Adressinformation des dieser Einrichtung (EG) zugeordneten Parameter-Servers (ADS) zu übertragen, und
wobei der Parameter-Server (ADS) zur Übermittlung der Parameter zu der Einrichtung (EG) ausgebildet ist.

10. Anordnung nach Patentanspruch 9,
**dadurch gekennzeichnet, dass**
in dem Adressierungs-Server (DNS) in Datensätzen jeweils zu den Namen von Domänen die Internet-Protokoll-Adressen der zugehörigen Server gespeichert sind,
dass die Adressinformation des der Einrichtung (EG) zugeordneten Parameter-Servers (ADS) in einem Textfeld gespeichert ist, welches zu dem Datensatz gehört, der zu dem in dieser Einrichtung (EG) gespeicherten Domänen-Namen gehört,
und dass die Antwort den Inhalt dieses Textfeldes umfasst.

11. Anordnung nach einem der Patentansprüche 9 oder 10,
**dadurch gekennzeichnet, dass**
der Adressierungs-Server (DNS) ein Domain-Name-System-Server ist.

12. Anordnung nach einem der Patentansprüche 9 bis 11,
**dadurch gekennzeichnet, dass**
in dem Datennetz ein Server zur Durchführung des Dynamic-Host-Configuration-Protocols angeordnet ist, der mit der Einrichtung (EG) über das Datennetz (LAN) verbunden ist und der zur Übermittlung eines Domänen-Namens zu dem Einrichtung (EG) nach dessen Inbetriebnahme mittels des DHCP-Verfahrens ausgebildet ist, wobei der Domänen-Name derjenige Domänen-Name ist, der von der Einrichtung (EG) in der Abfragenachricht verwendet wird.

13. Anordnung nach Patentanspruch 12,
**dadurch gekennzeichnet, dass**
die Einrichtung (EG) einer Domäne des Datennetzes (LAN) zugeordnet ist und der in der Abfragenachricht übermittelte Domänen-Name der Name dieser Domäne ist.

14. Anordnung nach einem der Patentansprüche 10 bis 12,
**dadurch gekennzeichnet, dass**
in dem Adressierungs-Server (DNS) ein Datensatz mit einem fiktiven Domänen-Namen gespeichert ist, der zu keiner realen Domäne gehört, und
dass der fiktive Domänen-Name zugleich als Domänen-Name im Speicher von solchen Einrichtungen (EG) gespeichert ist, in denen kein Domänen-Name einer diesen zugeordneten realen Domäne gespeichert sind.

## Claims

1. Method for configuring a device (EG) in a data network (LAN),
where the data network (LAN) used is a voice data network in which voice information is sent in data packets on the basis of the Internet protocol,
where
in step a) a domain name is stored in the device (EG),
in step b) the device (EG) transmits a request message, which comprises the domain name, to an addressing server (DNS) which is used to convert between domain names and the Internet addresses associated therewith,
in step c) the addressing server (DNS) transmits to the device (EG), in response to the request message, address information from a parameter server (ADS) associated with this device (EG),
in step d) the device (EG) uses the address information to set up a connection to the parameter server (ADS), and
in step e) the parameter server (ADS) uses this connection to transmit to the device (EG) parameters which are used to configure the device (EG).

2. Method according to Patent Claim 1,
**characterized in that**
the domain name is the name of that domain which has the device (EG) associated with it.

3. Method according to one of the preceding patent claims,
**characterized in that**
the addressing server (DNS) uses data records to store the Internet protocol addresses of the associated servers for the respective names of domains,
**in that** the address information from the parameter server (ADS) associated with the device (EG) is stored in a text field which belongs to the data record which belongs to the domain name associated with this device (EG),
and **in that** the content of this text field is sent to the device (EG) as the response.

4. Method according to one of the preceding patent claims,
**characterized in that**
the addressing server (DNS) used is a domain name system server.

5. Method according to one of the preceding patent claims,
**characterized in that**
in step a) an input from a user or administrator inputs and stores the domain name on the device (EG).

6. Method according to one of Patent Claims 1 to 4,
**characterized in that**
in step a) a method according to the Dynamic Host Configuration Protocol is used to send the device (EG), after it has been started up, the domain name for storage and/or the device (EG) is allocated a valid Internet address.

7. Method according to one of Patent Claims 1 to 6,
**characterized in that**
in step a) a fictitious domain name which does not belong to a real domain is stored in the device (EG) as the domain name.

8. Method according to Patent Claim 7,
**characterized in that**
in step a) not only the fictitious domain name but also a real domain name, which is the domain name with which the device (EG) is associated, is stored in the device (EG) as domain name,
in step b) a first attempt is used to transmit the request message with the real domain name to the addressing server (DNS), and
in step c) if no address information can be ascertained in the addressing server (DNS) using the domain name transmitted in the first attempt then the addressing server (DNS) sends a negative acknowledgement message to the device (EG) as address information, with the terminal using a second attempt, following receipt of the negative acknowledgement message, to send a further request message with the fictitious domain name to the addressing server (DNS).

9. Arrangement for configuring a device (EG) in a data network (LAN),
where the data network (LAN) is a voice data network in which voice information is sent in data packets on the basis of the Internet protocol,
where the device (EG) is provided with a memory for storing a domain name,
with an addressing server (DNS) which is used to allocate domain names to Internet addresses,
and with a parameter server (ADS) which stores parameters which can be used to configure the device (EG) for operation in the data network (LAN),
where the device (EG), the addressing server (DNS) and the parameter server (ADS) are connected via the data network (LAN),
where the device (EG) is designed to transmit a request message to the addressing server (DNS), said request message comprising the domain name stored in the device (EG),
where the addressing server (DNS) comprises means for transmitting to the device (EG), in response to the request message, the address information from the parameter server (ADS) associated with this device (EG) using the domain name transmitted by the device (EG), and
where the parameter server (ADS) is designed to send the parameters to the device (EG).

10. Arrangement according to Patent Claim 9,
**characterized in that**
the addressing server (DNS) uses data records to store the Internet protocol addresses of the associated servers for the respective names of domains,
**in that** the address information from the parameter server (ADS) associated with the device (EG) is stored in a text field which belongs to the data record which belongs to the domain name stored in this device (EG),
and **in that** the response comprises the content of this text field.

11. Arrangement according to one of Patent Claims 9 to 10,
**characterized in that**
the addressing server (DNS) is a domain name system server.

12. Arrangement according to Patent Claims 9 to 11,
**characterized in that**
the data network contains a server for implementation of the Dynamic Host Configuration Protocol which is connected to the device (EG) via the data network (LAN) and which is designed to send a domain name to the device (EG) using the DHCP method after said device has been started up, the domain name being that domain name which is used by the device (EG) in the request message.

13. Arrangement according to Patent Claim 12,
**characterized in that**
the device (EG) is associated with a domain in the data network (LAN), and the domain name sent in the request message is the name of this domain.

14. Arrangement according to one of Patent Claims 10 to 12,
**characterized in that**
the addressing server (DNS) stores a data record with a fictitious domain name which does not belong to a real domain, and
**in that** the fictitious domain name is simultaneously stored as domain name in the memory of devices (EG) in which no domain name for a real domain associated therewith is stored.

## Revendications

1. Procédé de configuration d'un dispositif (EG) dans un réseau de données (LAN),
dans lequel on utilise comme réseau de données (LAN) un réseau de données vocales dans lequel des informations vocales sont transmises dans des paquets de données selon le Protocole Internet,
à l'étape a), un nom de domaine est enregistré dans le dispositif (EG),
à l'étape b), le dispositif (EG) transmet un message de demande, qui comprend le nom de domaine, à un serveur d'adressage (DNS) qui sert à la conversion entre des noms de domaine et les adresses Internet associées à ceux-ci,
à l'étape c), le serveur d'adressage (DNS) transmet au dispositif (EG), en réponse au message de demande, une information d'adresse d'un serveur de paramètres (ADS) associé à ce dispositif (EG),
à l'étape d), le dispositif (EG) établit à l'aide de l'information d'adresse une liaison vers le serveur de paramètres (ADS), et
à l'étape e), le serveur de paramètres (ADS) transmet au dispositif (EG) par l'intermédiaire de cette liaison des paramètres qui servent à la configuration du dispositif (EG).

2. Procédé selon la revendication 1,
**caractérisé par le fait que** le nom de domaine est le nom du domaine auquel le dispositif (EG) est associé.

3. Procédé selon l'une des revendications précédentes,
**caractérisé par le fait que**
dans le serveur d'adressage (DNS), les adresses de Protocole Internet des serveurs associés sont mémorisées dans des blocs de données pour les noms de domaines respectifs,
l'information d'adresse du serveur de paramètres (ADS) associé au dispositif (EG) est mémorisée dans un champ de texte qui appartient au bloc de données qui appartient au nom de domaine associé à ce dispositif (EG),
et le contenu de ce champ de texte est transmis comme réponse au dispositif (EG).

4. Procédé selon l'une des revendications précédentes,
**caractérisé par le fait qu'**un serveur de système de nom de domaine (Domain Name System) est utilisé comme serveur d'adressage (DNS).

5. Procédé selon l'une des revendications précédentes,
**caractérisé par le fait que**, à l'étape a), au moyen d'une entrée effectuée par un utilisateur ou un administrateur, le nom de domaine est entré et mémorisé sur le dispositif (EG).

6. Procédé selon l'une des revendications 1 à 4,
**caractérisé par le fait que**,
à l'étape a), le nom de domaine est transmis pour mémorisation au dispositif (EG) après sa mise en service au moyen d'un procédé selon le protocole appelé Dynamic Host Configuration Protocol et/ou une adresse Internet valide est attribuée au dispositif (EG).

7. Procédé selon l'une des revendications 1 à 6,
**caractérisé par le fait que**,
à l'étape a), un nom de domaine fictif, qui n'appartient à aucun domaine réel, est mémorisé comme nom de domaine dans le dispositif (EG).

8. Procédé selon la revendication 7,
**caractérisé par le fait que**
à l'étape a), outre le nom de domaine fictif, un nom de domaine réel qui est le nom du domaine auquel le dispositif (EG) est associé est aussi mémorisé comme nom de domaine dans le dispositif (EG),
à l'étape b), lors d'un premier essai, le message de demande est transmis avec le nom de domaine réel au serveur d'adressage (DNS), et
à l'étape c), si aucune information d'adresse ne peut être déterminée dans le serveur d'adressage (DNS) à l'aide du nom de domaine transmis lors du premier essai, le serveur d'adressage (DNS) transmet au dispositif (EG) comme information d'adresse un message d'accusé de réception négatif,
le dispositif envoyant alors au serveur d'adressage (DNS) après la réception du message d'accusé de réception négatif, lors d'un deuxième essai, un autre message de demande avec le nom de domaine fictif.

9. Système de configuration d'un dispositif (EG) dans un réseau de données (LAN),
le réseau de données (LAN) étant un réseau de données vocales dans lequel des informations vocales sont transmises dans des paquets de données selon le Protocole Internet,
le dispositif (EG) étant muni d'une mémoire pour la mémorisation d'un nom de domaine,
avec un serveur d'adressage (DNS) qui sert à associer des noms de domaine à des adresses Internet
et avec un serveur de paramètres (ADS) dans lequel sont mémorisés des paramètres qui sont utilisables pour la configuration du dispositif (EG) en vue du fonctionnement de celui-ci dans le réseau de données (LAN),
le dispositif (EG), le serveur d'adressage (DNS) et le serveur de paramètres (ADS) étant reliés par l'intermédiaire du réseau de données (LAN),
le dispositif (EG) étant conçu pour transmettre au serveur d'adressage (DNS) un message de demande qui comprend le nom de domaine mémorisé dans le dispositif (EG),
le serveur d'adressage (DNS) comprenant des moyens pour transmettre au dispositif (EG) en réponse au message de demande, à l'aide du nom de domaine transmis par le dispositif (EG), l'information d'adresse du serveur de paramètres (ADS) associé à ce dispositif (EG), et
le serveur de paramètres (ADS) étant conçu pour transmettre les paramètres au dispositif (EG).

10. Système selon la revendication 9,
**caractérisé par le fait que**
dans le serveur d'adressage (DNS), les adresses de Protocole Internet des serveurs associés sont mémorisées dans des blocs de données pour les noms de domaines respectifs,
l'information d'adresse du serveur de paramètres (ADS) associé au dispositif (EG) est mémorisée dans un champ de texte qui appartient au bloc de données qui appartient au nom de domaine mémorisé dans ce dispositif (EG),
et la réponse comprend le contenu de ce champ de texte.

11. Système selon l'une des revendications 9 ou 10,
**caractérisé par le fait que** le serveur d'adressage (DNS) est un serveur de système de nom de domaine (Domain Name System).

12. Système selon l'une des revendications 9 à 11,
**caractérisé par le fait que**, dans le réseau de données, il y a un serveur qui est destiné à la mise en oeuvre du Dynamic Host Configuration Protocol, qui est relié au dispositif (EG) par l'intermédiaire du réseau de données (LAN) et qui est conçu pour transmettre un nom de domaine au dispositif (EG) après la mise en service de celui-ci au moyen du procédé DHCP, le nom de domaine étant le nom du domaine qui est utilisé par le dispositif (EG) dans le message de demande.

13. Système selon la revendication 12,
**caractérisé par le fait que** le dispositif (EG) est associé à un domaine du réseau de données (LAN) et que le nom de domaine transmis dans le message de demande est le nom de ce domaine.

14. Système selon l'une des revendications 10 à 12,
**caractérisé par le fait que**
dans le serveur d'adressage (DNS), il est mémorisé un bloc de données avec un nom de domaine fictif qui n'appartient à aucun domaine réel, et
le nom de domaine fictif est mémorisé en même temps comme nom de domaine dans la mémoire de dispositifs (EG) dans lesquels aucun nom d'un domaine réel associé n'est mémorisé.
